# EUROPEAN PATENT APPLICATION

(11) **EP 4 851 743 A1**
(43) Date of publication of application: **09.12.2026**
(21) Application number: 26182189.6
(22) Date of filing: 01.06.2026
(51) Int. Cl.: G05D 1/242, G01S 17/931, G05D 1/243, G05D 1/244, G05D 1/248, G05D 105/28, G05D 107/70, G05D 109/10, G05D 111/10, G05D 111/20, G05D 111/67

(54) **METHOD FOR DETERMINING A SET OF SENSORS TO BE USED TO PERFORM AN AUTONOMOUS DRIVING FUNCTION OF AN INDUSTRIAL TRUCK**

(30) Priority: 03.06.2025 IT 202500012883
(71) Applicant: Toyota Material Handling Manufacturing Italy S.p.A, 40132 Bologna (IT)
(72) Inventor: Mastroianni, Francesco, 40132 Bologna (IT)
(74) Representative: Hoffmann Eitle

(57) **Abstract**

A method for determining a preferred subset of sensors intended to be used for the detection of the position of an industrial truck at a predetermined site, wherein said detection of the position is used to perform an autonomous driving function of the industrial truck at the predetermined site, said method comprising the steps of: determining a plurality of subsets of sensors different from each other (S11), wherein each subset of sensors of the plurality of subsets of sensors is a subset of a same set of sensors that can be used for detecting the position of an industrial truck, and determining, among the plurality of determined subsets of sensors and based on characteristics of the predetermined site, the preferred subset of sensors intended to be used for the detection of the position of an industrial truck at the predetermined site.

## Description

### Field of the disclosure

The present disclosure relates to a method for determining a set of sensors to be used for performing an autonomous driving function of an industrial truck at a predefined site.

### Technical background

It is known in the art to realize industrial trucks, such as for example a forklift truck, equipped with an autonomous driving function. Such industrial trucks are equipped with a set of sensors to locate the industrial truck and allow navigation at a predetermined site, for example an industrial site, a logistics hub, a warehouse, an airport or a port area. Generally, in an attempt to increase the safety or accuracy in locating the truck, a large number of sensors are installed on the industrial truck itself.

However, an excessive number of sensors are often installed for locating the industrial truck, which leads to a high cost of the machine, without improving the performance of the autonomous driving function, or even leading to a degraded function, for example in the event that sensors of an unsuitable type are involved in the autonomous driving function at a predetermined site or under certain environmental conditions.

In addition, the known solutions are not able to adequately cope with a change in the conditions in which the industrial truck is operating, leading to possible problems related to the safety of the autonomous driving function.

### Summary of the disclosure

An object of the present disclosure is to provide a method for determining a set of sensors to be used for performing an autonomous driving function of an industrial truck that is capable of overcoming one or more of the above-described problems.

In light of the above, the present disclosure proposes a method for determining a preferred subset of sensors intended to be used for the detection of the position of an industrial truck at a predetermined site, wherein said detection of the position is used to perform an autonomous driving function of the industrial truck at the predetermined site, said method comprising the steps of:
- determining a plurality of subsets of sensors that are different from each other, wherein each subset of sensors of the plurality of subsets of sensors is a subset of a same set of sensors that can be used for the detection of the position of an industrial truck,
- determining, among the plurality of determined subsets of sensors and based on characteristics of the predetermined site, the preferred subset of sensors intended to be used for the detection of the position of an industrial truck at the predetermined site.

Preferably, the method further comprises the steps of:
- determining a target performance relating to the accuracy of the detected position of the industrial truck based on characteristics of the predetermined site,
- performing a plurality of tests of the autonomous driving function of an industrial truck at the predetermined site by activating, for each test, a subset of sensors from the plurality of determined subsets of sensors;
- analysing the plurality of tests to associate each subset of sensors with a performance index correlated with a deviation from the determined target performance,
- analysing the plurality of performance indices to determine, based on the analysis of the plurality of performance indices, the preferred subset of sensors intended to be used for the detection of the position of an industrial truck at the predetermined site.

Preferably, the set of sensors usable for the detection of the position of an industrial truck includes any combination of the following sensors: a camera system, a geolocation system, a LIDAR system, an ultrasonic sensor system, and a marker detection system.

Preferably, after determining the preferred subset of sensors, the method comprises the step of mounting on the industrial truck intended to be used at the predetermined site the sensors included in the determined preferred subset of sensors, without including the sensors of the set of sensors that are not included in the determined preferred subset of sensors.

Preferably, the industrial truck is equipped with all sensors included in the set of sensors usable for the detection of the position of an industrial truck, wherein the preferred subset of sensors is determined dynamically during operation of the industrial truck.

Preferably, after determining the preferred subset of sensors, the method comprises the step of performing the autonomous driving function by using the preferred subset of sensors, without using the sensors of the set of sensors mounted on the industrial truck that are not included in the determined preferred subset of sensors.

Preferably, the method comprises the steps of:
- determining a zone of the predetermined site where the industrial truck is located, and
- selecting a subset of sensors as the preferred subset of sensors based on the determined zone.

Preferably, the zone is determined by using one or more of the sensors in the set of sensors usable for the detection of the position of an industrial truck.

Preferably, the method comprises the steps of:
- determining a current environmental condition, and
- selecting a subset of sensors as the preferred subset of sensors based on the determined environmental condition and/or the determined zone.

Preferably, the environmental condition is determined by using a sensor in the set of sensors usable for the detection of the position of an industrial truck or a weather sensor mounted on the industrial truck.

Preferably, after selecting the subset of sensors based on the zone of the predetermined site and/or the current environmental condition, the method comprises the step of:
- verifying that the performance of the autonomous driving function using the selected subset of sensors complies with a target performance, and
- if the performance of the autonomous driving function using the selected subset of sensors complies with the target performance, performing the autonomous driving function by using the selected subset of sensors;
- if the performance of the autonomous driving function using the selected subset of sensors does not comply with the target performance, selecting a different subset of sensors to perform the autonomous driving function that complies with the target performance and updating a method for selecting the preferred subset of sensors depending on the zone of the predetermined site and/or the current environmental condition.

Preferably, the environmental condition includes a weather condition, such as for example one of rain, fog, darkness, snow.

Preferably, the predetermined site is one of an airport, a port, a railway station, a logistics site, an industrial plant, a warehouse or the like.

According to one aspect there is provided a computer program which, when executed by a computer, causes the computer to execute the steps of the method described above.

According to one aspect there is provided a processing device configured to perform the steps of one of the methods described above.

According to a further aspect, there is provided an industrial truck equipped with an autonomous driving function, comprising a plurality of sensors included in a set of sensors usable for the detection of the position of an industrial truck and a processing device (or control means) configured to perform the autonomous driving function by using signals received from one or more of the sensors of the plurality of sensors, wherein the processing device (or the control means) is configured to perform the steps of a method as described above.

Thanks to the present invention, it is possible to realize an autonomous driving system for an industrial truck that allows to reduce costs, by selecting an appropriate number of sensors for locating the truck at a predetermined site. In addition, an efficient and accurate industrial truck navigation can be achieved depending on the circumstances. The safety in the use of the industrial truck has increased. It is also possible to obtain real-time adaptations to optimise the navigation and positioning of the industrial truck in any working condition.

### Brief description of the drawings

The present disclosure will be illustrated with reference to exemplary embodiments described with reference to the accompanying drawings.

In the drawings:
- figure 1 illustrates a view of an industrial truck equipped with a plurality of sensors to perform the autonomous driving function;
- figure 2 illustrates a method for determining a kit of sensors for autonomous driving;
- figure 3 illustrates a method for determining in real time a kit of sensors for autonomous driving;
- figure 4 illustrates a schematic view of components of an industrial truck involved in the performance of the autonomous driving function.

### Detailed description

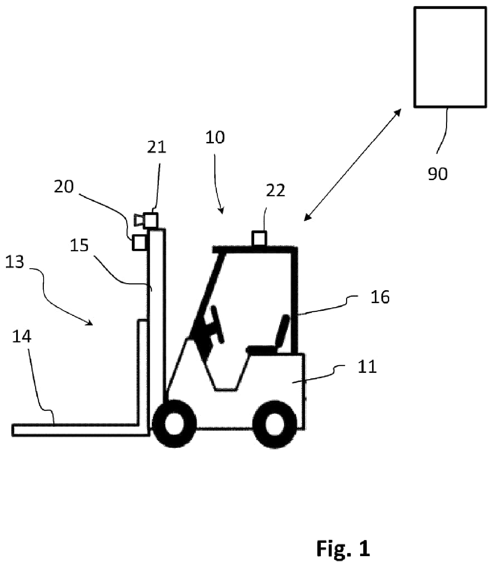

Figure 1 shows an industrial truck 10 equipped with an autonomous driving function, for example a forklift truck. It is understood that the present disclosure is not limited to a forklift truck, but it includes and is also applicable to other types of industrial trucks that may be used at a predetermined site, such as for example an industrial site, a port, a logistics hub, a warehouse, an airport, a railway station or the like.

Preferably, the industrial truck includes operating means including for example traction means and/or material handling means. The industrial truck 10 can be used to handle material, since it is equipped with material handling means 13 of the type shown in figure 1. In the example shown in the figure, the industrial truck 10 includes a frame 11. The material handling means 13 includes a mast 15, e.g. rotatably mounted on the frame 11, and a lifting element 14 (e.g. a fork) for lifting a load; the lifting element 14 is slidably mounted on the mast 12 along the mast 15. It is understood that the material handling means 13 can also be made in another way according to the prior art. For example, the lifting fork could be replaced with a different handling device, such as a gripper, strut or the like.

The industrial truck 10 may comprise a user station, for example comprising a user seat. The station can be made in a cabin 16 of the driver. However, other configurations are also possible; for example, since it is equipped with an autonomous driving function, the user cabin and the driver station could be absent.

The industrial truck 10 may preferably be electrically driven by means of an electrical energy storage system (not shown in the figure). The electrical energy storage system may for example be housed inside the frame 11, in a removable manner or in an integrated and non-removable manner. The electrical energy storage system may include any battery system, for example one or more battery packs, which may be lithium-ion or even lead acid, nickel-metal hydride battery packs, or any other known type. Alternatively, the industrial truck could also include an endothermic motor, or could include a hybrid drive system, thus equipped with one or more electric and endothermic motors. The industrial truck 10 could include four wheels or three wheels arranged on a front axle and a rear axle. However, other multi-axle configurations are also included in the present disclosure.

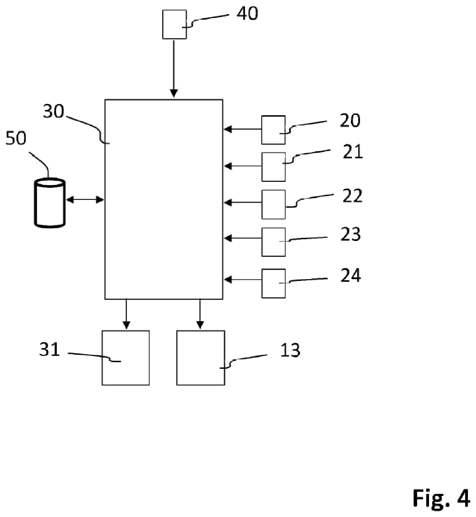

The industrial truck 10 includes locomotion means 31 (shown schematically in figure 4) intended to allow locomotion of the truck itself. The locomotion means 31 preferably include one or more electric motors, for example an electric motor for each axle of the industrial truck. The locomotion means 31 preferably include a steering system, for example an electric steering system. Preferably, the locomotion means 31 are powered by the energy storage system. Preferably, also the material handling means 13 are powered by the energy storage system.

The industrial truck 10 further includes a control unit 30 (schematically represented in figure 4) configured to control the operating means, which in the example in figure 4 comprise the material handling means 13 and the locomotion means 31. In the present disclosure, the control unit 30 may be referred to as "controller 30" or "control means 30", which are to be understood as synonyms in the description. The control unit 30 can be realized in any known way, for example by means of a processing device, an electronic board, one or more processing devices. The control unit according to the present disclosure is not limited to any type of hardware and/or software implementation, and may be realized with a distributed architecture or with a single device. The control means 30 may be configured to perform the autonomous driving function, i.e. to control the operating means 13, 31 based on the signals provided by the location sensors 20-24.

Preferably, the control unit 30 is configured to control the material handling means 13 and/or the locomotion means 31 on the basis of commands imparted by a user of the machine or alternatively imparted by a remote control device, for example a remote task (or tasks) management station of one or more industrial trucks of a predetermined site. Preferably, the control unit 30 is configured to control the material handling means 13 and/or the locomotion means 31 on the basis of location information about the industrial truck; preferably the location information about the industrial truck is obtained by means of one or more sensors 20, 21, 22, 23 intended to be used for the detection of the position of an industrial truck at a predetermined site, wherein said position detection is used to perform an autonomous driving function of the industrial truck at the predetermined site. The sensors 20-24 may also be referred to in the present disclosure as "location sensors".

"Autonomous driving function" means, for example, a navigation function to drive the industrial truck according to a predetermined route or from a starting point to a destination point within the predetermined site. The autonomous driving function may also comprise a material handling function, for example a function of unloading goods from a train, a truck or the like, or a function of moving goods from a first area to a second area of a warehouse, or a function of loading a vehicle with goods, such as for example articles positioned on a pallet, or a combination of thereof and a navigation function. More generally, an autonomous driving function can be understood as any function to perform a task assigned to an industrial truck.

The set of sensors usable for the detection of the position of an industrial truck include any combination of the following sensors: a LIDAR system 20 (i.e. a system including optical radars, "Light Detection and Ranging"), a camera system 21, an ultrasonic sensor system 22, a geolocation system 23, and a marker detection system 24. Schematic examples of mounting positions of some location sensors, in particular of the camera system 21, the LIDAR system 20 and the ultrasonic sensor system 22, are shown in figure 1; other mounting positions of the location sensors may also be used.

The camera system 21 may include a stereo camera and/or one or more monocular video cameras. The geolocation system 23 may include one or more satellite navigation receivers such as for example GNSS (Global Navigational Satellite System) or GPS (Global Positioning System) receivers. The LIDAR system 20 may comprise various light emitting elements (e.g. lasers) and light sensors (not shown) and generates a mapping of detected characteristic elements by using the emitted light that is reflected onto the objects in the environment of the industrial truck and detected by the light sensors. The marker detection system 24 may be implemented with a software module (e.g. executed by the control means 30) associated with a camera system, for recognizing an optical marker present in an image taken by the camera system. An optical marker may for example include a QR code or any other optical code applied to a certain position of the site where the industrial truck is intended to operate. The marker may include information relating to a position where the marker is positioned. The ultrasonic sensor system 22 can be realized according to known techniques to allow detecting the position of the industrial truck with respect to objects present in the vicinity of the truck; these sensors emit ultrasonic pulses and then measure the time necessary for the echo reflected from the object to return, allowing to calculate the distance and therefore the position of the industrial truck with respect to objects situated near the truck itself.

According to one aspect of the present disclosure, there is provided a method for determining a preferred subset of sensors intended to be used for the detection of the position of an industrial truck at a predetermined site, wherein said detection of the position is used to perform an autonomous driving function of the industrial truck at the predetermined site. The method may be performed when configuring an industrial truck before it is implemented or sent to a predetermined site for use thereof. As is known, industrial trucks are often used in a circumscribed area (or site) to perform a certain function or a limited group of functions associated with the predetermined site. A method according to the present disclosure allows to select a preferred subset of sensors intended to be used for the detection of the position of an industrial truck at a predetermined site, starting from a group or set of sensors. In the present disclosure, "location sensors" or "sensors intended to be used for the detection of the position of an industrial truck at a predetermined site" means any system intended to provide location information about an industrial truck, either through software, through hardware or a combination of software and hardware. The present disclosure is not limited to a specific type of location sensor.

In one embodiment, the method comprising the steps of:
- determining a plurality of subsets of sensors that are different from each other, wherein each subset of sensors of the plurality of subsets of sensors is a subset of a same set of sensors that can be used for the detection of the position of an industrial truck,
- determining, among the plurality of determined subsets of sensors and based on characteristics of the predetermined site, the preferred subset of sensors intended to be used for the detection of the position of an industrial truck at the predetermined site.

For example, the set of sensors usable for the detection of the position of an industrial truck may include all types of sensors that can be used for the detection of the position of an industrial truck in an autonomous driving function, for example all of the following sensors: the LIDAR system 20, the camera system 21, the ultrasonic sensor system 22, the geolocation system 23, and the marker detection system 24 (other types of sensors could also be part of the complete set of location sensors). The subsets of sensors that are different from each other include subsets of the aforementioned complete set of sensors, for example:
1) Subset #1: camera system 21, ultrasonic sensor system 22, geolocation system 23, and marker detection system 24,
2) Subset #2: LIDAR system 20, ultrasonic sensor system 22, geolocation system 23, and marker detection system 24,
3) Subset #3: LIDAR system 20, camera system 21, geolocation system 23, and marker detection system 24,
4) Subset #4: LIDAR system 20, camera system 21, ultrasonic sensor system 22, and marker detection system 24,
5) Subset #5: LIDAR system 20, camera system 21, ultrasonic sensor system 22, and geolocation system 23,
6) Subset #6: ultrasonic sensor system 22, geolocation system 23, and marker detection system 24,
7) Subset #7: camera system 21, geolocation system 23, and marker detection system 24,
8) Subset #8: camera system 21, ultrasonic sensor system 22, and marker detection system 24,
9) Subset #9: camera system 21, ultrasonic sensor system 22, and geolocation system 23.

By "determining a plurality of subsets of sensors that are different from each other" is also meant "identifying" or "recognizing" this plurality of subsets. The determination of the subsets can also take place through the sole recognition of the complete set of sensors (or the relative installation on the industrial truck) and the identification of a plurality of combinations of sensors included in the complete set of sensors.

The subsets of sensors may include any combination of the complete set of sensors. In particular, the subsets could also include only two of the location sensors or in extreme cases even a single sensor.

The method according to the invention allows to determine, based on the characteristics of the predetermined site, the preferred subset of sensors intended to be used for the detection of the position of an industrial truck at the predetermined site. For example, the method may use a set of characteristics of the predetermined site and an association rule among different characteristics of the predetermined site and a subset of sensors. The method may use a model that associates characteristics of the predetermined site with subsets of sensors. The model can be a classifier model, for example a model trained through machine learning. Different types of classifiers can be used according to the prior art. The present disclosure is not limited to the specific type of classifier and model used to determine the subset of sensors. For example, a tree classifier, or a neural network classifier could be used.

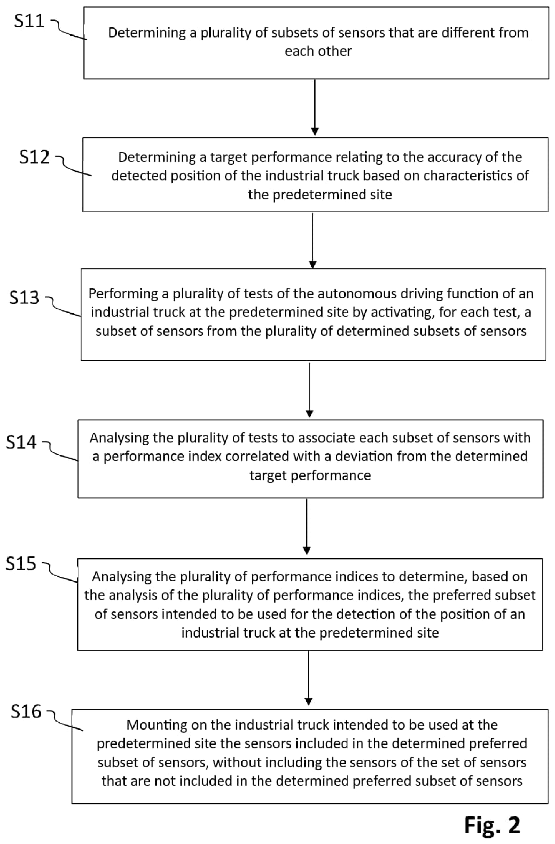

Referring to figure 2, a method for determining a subset of position sensors to be used in an autonomous driving function of an industrial truck at a predetermined site is shown. The method may be performed, at least in part, by processing means 90 (shown in fig. 1), for example processing means remote from an industrial truck. The processing means 90 may be configured to be in communication with an industrial truck 10 (or more specifically with the control means 30 of the industrial truck), for example an industrial truck used to perform tests for determining the set of sensors (or subset of sensors) to be used in the autonomous driving function. The processing means 90 could be in communication with the industrial truck 10 according to known techniques, with wireless communication, for example of a cellular, Wi-Fi or other type. The processing means could also be mounted on board the industrial truck 10, in which case no wireless transceiver systems would be necessary. In the example of figure 2, the industrial truck 10 is positioned at the predetermined site where it is then intended to be used.

As shown in figure 2, the method may include in one embodiment the steps of:
- step S11: determining a plurality of subsets of sensors that are different from each other, wherein each subset of sensors of the plurality of subsets of sensors is a subset of a same set of sensors that can be used for detecting the position of an industrial truck; this step can be performed by the processing means 90 based on the complete set of location sensors mounted on the truck 10; the plurality of subsets of sensors can depend on the type of site at which the industrial truck is intended to operate;
- step S12: determining a target performance relating to the accuracy of the detected position of the industrial truck based on characteristics of the predetermined site; the target performance could be determined depending on the tasks that the industrial truck must perform at the predetermined site, for example based on the type of loads that must be handled, the type of shelving, the size of the seats of the loads in a shelving of a warehouse; according to the type of industrial site and the type of task that the truck must be able to perform, the target performance can be different; the target performance can be set as a parameter in a classifier model, or in a deterministic algorithm or rule to determine the subset of sensors; this step can be performed by the processing means 90; the processing means 90 can determine the target performance also based on an input from an operator;
- step S13: performing a plurality of tests of the autonomous driving function of an industrial truck at the predetermined site by activating, for each test, a subset of sensors from the plurality of determined subsets of sensors; the industrial truck 10 is preferably equipped with all the sensors for location included in all the determined subsets; the processing means 90 can advantageously control the industrial truck 10 by assigning a task to be performed at the predetermined site and disabling from time to time (for each of the tests) one or more of the sensors with which the industrial truck 10 is equipped; advantageously, the same task is assigned in all the tests to compare the results under equal conditions;
- step S14: analysing the plurality of tests to associate each subset of sensors with a performance index correlated to a deviation from the determined target performance (covariance); in this step the processing means 90 can acquire data relating to a work session (test) performed by the industrial truck 10 by using a subset of sensors; the data can include information about the accuracy of a position of the industrial truck at different steps of the task to be performed, for example a position with respect to a shelving or a bridge crane at the predetermined site, or even a data relating to an accident, a collision or an incorrect handling of a load; the data are analysed to evaluate a deviation (covariance) from the determined target performance; the target performance can be expressed in terms of position accuracy, speed of execution of a task, absence of accidents etc.; a performance index is calculated based on the deviation from the determined target performance by the processing means 90;
- step S15: analysing the plurality of performance indices to determine, based on the analysis of the plurality of performance indices, the preferred subset of sensors intended to be used for the detection of the position of an industrial truck at the predetermined site; in this step the processing system 90 determines an optimal subset of sensors based on the performance indices collected during the tests; for example, the best performance index is identified and the subset of sensors associated with that index is selected as the preferred subset of sensors.

After determining the preferred subset of sensors, the method may comprise step S16 of mounting on the industrial truck intended to be used at the predetermined site the sensors included in the determined preferred subset of sensors, without including the sensors of the set of sensors that are not included in the determined preferred subset of sensors.

Following the determination of the subset of the sensors, therefore, the industrial truck 10 is equipped with the set (or subset) of sensors suitable for maximizing performance at the predetermined site. The industrial truck 10 (or several specimens of the same industrial truck model) are then sent and implemented for use at the predetermined site. Therefore, not all location sensors are included in the configuration of the industrial truck, allowing to reduce the machine costs and maintaining an adequate level of performance and safety of the operations of the industrial truck at the predetermined site for which it is intended.

According to one embodiment, the set of sensors for locating the industrial truck may be varied in real time during use of the industrial truck at the predetermined site. In this embodiment, the industrial truck is equipped with all the sensors included in the set of sensors usable for the detection of the position of an industrial truck, wherein the preferred subset of sensors is determined dynamically during operation of the industrial truck.

In this case, all the location sensors are mounted on the industrial truck 10, but only some of them (a subset) are used to perform the autonomous driving function. The subset of location sensors that is used at a certain time depends on current operating circumstances. For example, the subset of location sensors that is used at a certain time depends on environmental conditions. Alternatively, the subset of location sensors that is used at a certain time depends on an area of the site where the industrial truck is operating at that time. Alternatively, the subset of location sensors that is used at a certain time depends on a type of task that the industrial truck performs at that time. The determination of the subset of sensors can be performed periodically during a work cycle, or only at the beginning of a work cycle; alternatively, the determination can be performed in real time when a certain condition is determined (for example the environmental conditions have changed, or the area of the industrial site in which the truck operates has changed).

After determining the preferred subset of sensors, the method comprises the step of performing the autonomous driving function by using the preferred subset of sensors, without using the sensors of the set of sensors mounted on the industrial truck that are not included in the determined preferred subset of sensors. This allows to reduce the computing power needed to perform the autonomous driving function, reducing the number of input signals that must be processed. In addition, potentially inaccurate signals can be excluded from the control of the autonomous driving function, making operations safer.

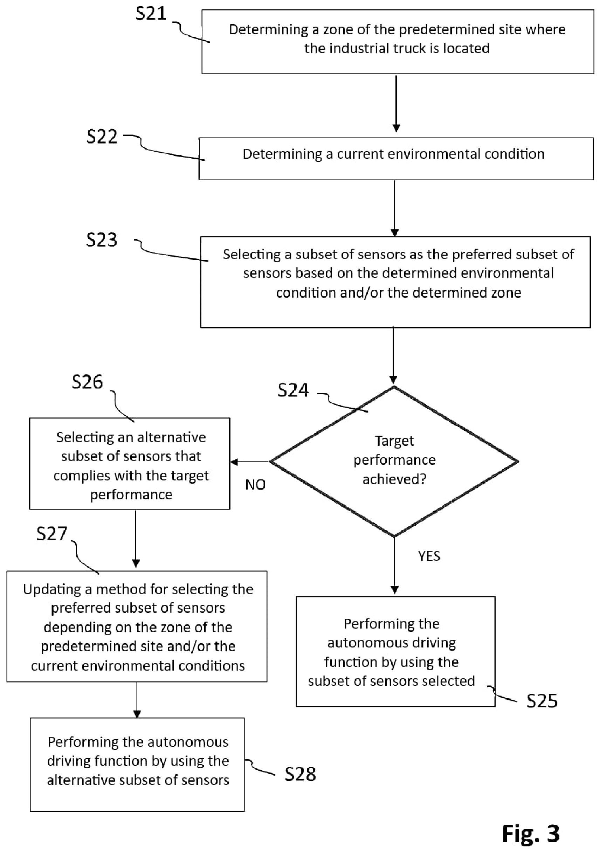

With reference to figure 3, an exemplary embodiment of the method for dynamic determination of the subset of sensors is shown in detail comprising the following steps.
- Step S21: initially, for example upon turning on the industrial truck or receiving a task to be performed, a zone of the predetermined site where the industrial truck is located is determined; this step can be performed by the control means 30 of the industrial truck 10, for example by processing a signal or information provided by one or more of the location sensors 20-24 of the industrial truck, for example of the geolocation sensor (a GPS receiver); in one embodiment, the predefined site is divided into different areas, for example an unloading/loading area, a storage area, a material processing area and so on; the areas of the predefined site depend on the type of site where the industrial truck is intended to operate, for example a port, an industrial site, a logistics hub and so on; the industrial truck 10 may advantageously include storage means 50 communicably connected with the control means 30 where a map of the predefined site and the relative subdivision into areas (or sub-areas) is stored; on the basis of the information relating to the subdivision into areas of the predefined site and on the information about the location obtained through the location sensors, the control means 30 are able to identify the area of the industrial site where the industrial truck is located at that time, or in real time;
- step S22: optionally additionally, or alternatively to step S21, the method comprises the step of determining a current environmental condition; this step can be advantageously performed by the control means 30 of the industrial truck based on a signal or information relating to the environmental conditions provided by a sensor 20-24 in the set of sensors usable for the detection of the position of an industrial truck or a weather sensor 40 mounted on the industrial truck; for example, the environmental condition can include a weather condition, such as for example one of: rain, fog, darkness, snow. For example, the control means 30 may be able to determine a fog condition based on an indication from the camera system or the LIDAR system. Alternatively, a weather sensor could measure humidity and/or temperature, the outputs of which can be used by the control means 30 to determine the environmental condition;
- step S23: in this step, a subset of sensors is selected as the preferred subset of sensors based on the determined environmental condition and/or the determined zone; this step is preferably performed by the control means 30 of the industrial truck based on the data acquired in the previous steps on the area of the industrial site and the environmental conditions in which the industrial truck is located at that time in real time; this allows to optimize and adapt the set of sensors used, increasing the level of safety and performance of the industrial truck in all circumstances; it is actually possible to avoid using a sensor that would be unsuitable in a certain situation and could lead to incorrectly locating the industrial truck; for example, the ultrasonic system could preferably be selected in case of fog or poor visibility, in conjunction with a geolocation system, whereas the optical systems could be selected in case of high visibility;
- step S24: optionally, the method comprises a step in which the performance of the autonomous driving function is evaluated in real time, that is, in particular the location function of the industrial truck is evaluated, after selecting a subset of sensors; it is therefore verified that the performance of the autonomous driving function using the selected subset of sensors complies with a target performance; in this case, the control means 30 are configured to evaluate the performance of the location function by comparing it, for example, with a target performance threshold or a target performance in terms of position accuracy and/or in a manner analogous to what has been described above with reference to step S14 of figure 2; the target performance can be advantageously stored in the storage means 50 of the industrial truck and configured by an operator;
- step S25: if the target performance has been achieved, or if the performance of the autonomous driving function using the selected subset of sensors complies with the target performance, step S25 follows, in which the autonomous driving function is performed by using the selected subset of sensors;
- step S26: if instead at step S24 it is determined that the target performance has not been achieved, or if the performance of the autonomous driving function using the selected subset of sensors does not comply with the target performance, step S26 follows, in which a different subset of sensors is selected to perform the autonomous driving function that complies with the target performance; this step can be performed by operating the industrial truck 10 with the different subset of sensors activated for the autonomous driving function and by performing a further step similar to step S24 (not shown in the figure); once a subset of sensors that meets the target performance has been identified (possibly following multiple iterations on a plurality of different subsets of sensors), step S27 follows;
- step S27: in this step, a method for selecting the preferred subset of sensors is updated depending on the zone of the predetermined site and/or the current environmental condition, in other words, the logic used in step S23 for the selection of the subset of location sensors is updated; the update preferably results in a different updated configuration of the control means 30, in particular at the programming level; this allows the real-time adaptation of the autonomous driving function to be improved in subsequent operations of the industrial truck;
- step S28: in this step the autonomous driving function is performed by using the alternative subset of sensors selected in step S26.

All the steps of the method of figure 3 are preferably performed by the control means 30 of the industrial truck.

The above description of embodiments applying the innovative principles of the invention is provided solely for the purpose of illustrating said principles and is therefore not to be construed as limiting the scope of the invention claimed herein.

## Claims

1. Method for determining a preferred subset of sensors (20-24) intended to be used for the detection of the position of an industrial truck (10) at a predetermined site, wherein said detection of the position is used to perform an autonomous driving function of the industrial truck at the predetermined site, said method comprising the steps of:
- determining (S11) a plurality of subsets of sensors that are different from each other, wherein each subset of sensors of the plurality of subsets of sensors is a subset of a same set of sensors that can be used for detecting the position of an industrial truck,
- determining (S16), among the plurality of determined subsets of sensors and depending on characteristics of the predetermined site, the preferred subset of sensors intended to be used for the detection of the position of an industrial truck at the predetermined site,
wherein, after determining the preferred subset of sensors, the method comprises the step of mounting (S16) on the industrial truck intended to be used at the predetermined site the sensors included in the determined preferred subset of sensors, without including the sensors of the set of sensors that are not included in the determined preferred subset of sensors.

2. A method according to claim 1, further comprising the steps of:
- determining (S12) a target performance relating to the accuracy of the detected position of the industrial truck based on characteristics of the predetermined site,
- performing (S13) a plurality of tests of the autonomous driving function of an industrial truck at the predetermined site by activating, for each test, a subset of sensors from the plurality of determined subsets of sensors,
- analysing (S14) the plurality of tests to associate each subset of sensors with a performance index correlated with a deviation from the determined target performance,
- analysing (S15) the plurality of performance indices to determine, based on the analysis of the plurality of performance indices, the preferred subset of sensors to be used for detecting the position of an industrial truck at the predetermined site.

3. A method according to one of claims 1 or 2, wherein the set of sensors (20-24) usable for the detection of the position of an industrial truck includes any combination of the following sensors: a camera system (21), a geolocation system (23), a LIDAR system (20), an ultrasonic sensor system (22), and a marker detection system (24).
